(19) Europäisches Patentamt
European Patent Office
Office européen des brevets

(11) **EP 4 650 890 A1**

(12) **EUROPEAN PATENT APPLICATION**

(43) Date of publication:
**19.11.2025 Bulletin 2025/47**

(21) Application number: **24175794.7**

(22) Date of filing: **14.05.2024**

(51) International Patent Classification (IPC):
**G05B 19/042** (2006.01)

(52) Cooperative Patent Classification (CPC):
**G05B 19/0428**; G05B 2219/25428

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **MUKIN, Roman**
  **5405 Baden-Daettwil (CH)**
• **HENCKEN, Kai Alfred**
  **79539 Lörrach (DE)**

(74) Representative: **Maiwald GmbH**
**Elisenhof**
**Elisenstraße 3**
**80335 München (DE)**

(54) **METHOD AND A SYSTEM FOR ASSESSING THE RELIABILITY OF FIELD DEVICE DATA**

(57) The invention relates to a computer-implemented method for assessing the reliability of field device data comprising the steps: starting (100) an individual cycle; receiving (102) reliability-related data from field devices; calculating (104) and accumulating a first reliability value and/or a first hazard value over a yet undetermined time span without compression according to a model that uses at least one variable representing the reliability-related data; calculating (106) and accumulating a second reliability value and/or a second hazard value over the yet undetermined time span with compression according to the model, which uses the at least one variable representing the reliability-related data, wherein the values of the at least one variable are compressed; comparing (108) the first and the second reliability and/or second hazard values to a related pre-defined threshold corresponding to an accuracy; if exceeding the threshold (110), stopping (112) the calculation of the first and the second reliability and/or hazard values and determining the time span; and storing (114) the compressed values of the at least one variable; and closing (116) the individual cycle.

Fig. 1

EP 4 650 890 A1

**Description**

FIELD OF THE INVENTION

The present invention relates to a method and a system for assessing the reliability of field device data under variable conditions measured.

BACKGROUND

The invention is situated within the field of reliability analysis, predictive maintenance, or, more generally, prognostics and health management and asset management systems. It is particularly concerned with devices that are deployed under diverse conditions in the field, with electrical distribution components or systems or electronics within them representing a primary focus.

In many of these applications, there is a difficulty in assessing the reliability of the devices in question due to their high reliability. This makes it challenging to conduct laboratory tests, and the dependency on environmental variables increases the amount of testing needed. One approach discussed in the literature is the usage of data from the devices in the field. Due to the large number of devices in use and the diverse environmental conditions to which they are exposed, this approach addresses the data scarcity described above. However, one challenge is that conditions are generally variable, necessitating the storage of data from a large number of devices over an extended period. As an illustrative example: A measurement taken every minute results in approximately 5 million data points over a 10-year period. This figure must then be multiplied by the number of devices under control, which may be, for example 10,000 devices. Therefore, the data has to be reduced. However, the reduction must not lead to a non-acceptable inaccuracy of the reliability assessment.

SUMMARY

There may be a desire to provide an improved method for reducing reliability-related data from field devices such as environmental or operational condition data to assess reliabilities from field devices.

The problem is solved by the subject-matter of the independent claims. Embodiments are provided by the dependent claims, the following description and the accompanying figures.

The described embodiments similarly pertain to the method for assessing the reliability of field device data and the system, as well as for a computer program element and a computer-readable medium. Synergetic effects may arise from different combinations of the embodiments although they might not be described in detail.

Further on, it shall be noted that all embodiments of the present invention concerning a method might be carried out with the order of the steps as described. Nevertheless, this has not to be the only and essential order of the steps of the method. The herein presented methods can be carried out with another order of the disclosed steps without departing from the respective method embodiment unless explicitly mentioned to the contrary hereinafter.

Technical terms are used by their common sense. If a specific meaning is conveyed to certain terms, definitions of terms will be given in the following in the context of which the terms are used.

In a first aspect, a computer-implemented method for assessing the reliability of field devices is provided. The method comprises the following steps. In a first step, an individual cycle is started. In a second step of the individual cycle, reliability-related data of at least one usage and/or environment variable are received from field devices. In a third step of the individual cycle, a first reliability value and/or a first hazard value is calculated and accumulated over a yet undetermined time span without compression. The calculation and accumulation are performed according to a model which uses at least one variable representing the reliability-related data. In a fourth step of the individual cycle, a second reliability value and/or a second hazard value is calculated and accumulated over the yet undetermined time span with compression according to the model, which uses the at least one variable representing the reliability-related data, wherein the values of the at least one variable are compressed. In a fifth step of the first cycle, the first and the second reliability and/or second hazard values are compared to a related pre-defined threshold corresponding to an accuracy. In a sixth step of the first cycle, if the threshold is exceeded, the calculation of the first and the second reliability and/or hazard values are stopped, and the time span is determined. In a seventh step of the individual cycle, the compressed values of the at least one variable are stored, preferably together with a time stamp, and the individual cycle is closed, i.e., the individual cycle ends.

In other words, the reliability and/or the hazard values are calculated once with compressed data and once with uncompressed data. The resulting values are compared to each other. If their difference is too high but still within a pre-defined limit, the compressed values of the current cycle are stored, and the compression of the values is stopped. The method guarantees that the accuracy of the data and the reliability of the device is given also when using compressed data. The method further allows for storing compressed values instead of each of the received values. It is noted that the term compressed values is used in this disclosure, where the values are represented by data. The expressions "compressed data" and "compressed values" therefore have the same meaning herein.

The reduction of data is solved by the compression of data. However, instead of compressing the data based on fixed time intervals, which may lead on the one hand to inefficiencies if the interval is too short, as it may not align with the shortest imaginable change of conditions, and on the other hand, may introduce an unknown error if the time interval is too long, the method provides dynamical compressing. That is, the data is not aggregated over a fixed time interval, e.g., per day, week, or year, but based on the change of the environment and usage conditions.

Therefore, a way is provided to compress and store reliability-related data from a large body of devices in the field in a way that their reliability in terms of their individual usage and environment can be reanalyzed when the model parameters of an underlying lifetime model are changed, or alternatively can be used, when combined with field failure or repair data to improve the accuracy of those model parameters. This is important, as the storage of all individual measurements is impossible due to their individual size and the large number of devices. In order to be most efficient in this storage, a dynamic compression scheme is proposed that controls the accuracy of the compressed data and saves them as soon as there are significant changes compared to the full, i.e., uncompressed data. The method evaluates the error introduced by the compression and then cuts or restarts the compression if a certain error threshold is reached. The compressed data also helps in making the reanalysis of either the device or the model simpler.

According to an embodiment, the reliability-related data is usage and/or environment data, and the variable representing the reliability-related data is a respective usage and/or environment variable.

The reliability-related data that are compressed and stored may be usage as well as environmental data from the devices.

According to an embodiment, the at least one variable relates to a temperature, pressure, humidity, voltage, current, pH value, vibration, intensity of salt or corrosive substances or amount of chemical substances.

That is, the environment and usage data may contain one or more of these types of data. The various types of data are assigned to a respective variable, which accepts the respective data as values. The list is not exhaustive.

According to an embodiment, the model comprises an acceleration factor, wherein the acceleration factor depends on the at least one usage and environment variable and on model parameters.

In the context of accelerated life modeling, an acceleration factor describes the increase or reduction in failure rate or of time until failure under specific conditions, that are different from some reference conditions. The time to failure for a device generally correlates with the amount of stress applied to the device. This correlation is mathematically modelled for various failure mechanisms using the acceleration factor. Usually, reference failure rate or time until failure are determined by tests under reference conditions, and the increase in failure rate or reduction of time until failure are determined by tests under specific conditions. By using the acceleration factor, in usually performed tests higher stresses can be applied to the devices than in the field, and failure-free time or period in the test can be shortened. In this disclosure, instead of tests under specific conditions, field data themselves are used. This is possible because, among a large number of devices, there are a number of devices that are exposed to environmental and usage conditions that would correspond to the higher stress conditions in tests.

Model parameters may be adapted during the operation of the devices. This may happen, for example, every few years, and independent of the cycles and the reliability assessment proposed in this disclosure. The update of the model parameters may be based on additional information such as failures observed and reasons why a failure occurred. Nevertheless, the update may be synchronized with the end or beginning of a cycle. Therefore, as an option, the individual cycle may include a step of checking, whether an update of the model parameters is required and if yes, combining data from a large number of devices including failure or service report data and to re-analyse the model parameters. The model parameters may then be adapted. Further, the reliability may be re-assessed using the updated model parameters. By adapting the model parameters, the model is refined and improved. The calculations and the comparison of the reliability and/or hazard values using the compressed and uncompressed data are performed with the updated model. The new model parameters can further be proven by using them not only for the next cycles but also for the previous cycles. For that, the stored compressed values may be used.

To control the accuracy, threshold values may be pre-defined, representing an allowed value or a range for the values, which a model parameter can adopt or might adopt in future adaptations. That is, not only the accuracy is proofed but as a second criterium, the range of the parameters, independent of the accuracy. For example, one representative limit, or two or more limits of the parameter in the models are predetermined. These can in general be derived from either prior knowledge or from known physical constraints.

According to an embodiment, the compressed data, i.e. the compressed values are used to calculate a reliability either as a function of the time covered or alternatively for a specific time instance.

According to an embodiment, the compressed and stored, values are used to reevaluate the reliability either at a fixed time or as a function of time, when the parameters of the model have changed.

According to an embodiment, a further step includes receiving separate failure or repair information from the field devices. The compressed values are used with the separately received failure or repair information to update or improve the model parameter.

The application of the separate failure or repair information may be performed, for example, when or before an individual cycle is closed. The updated and improved model parameters for the next cycle may be based on all available compressed values and the failure and repair information, where "all available compressed values" relates to all values stored over the lifetime of the individual devices. It therefore comprises the compressed values of all previous and may be partly or completely of the current cycle. For example, the model parameters can be updated using a Maximum Likelihood Estimation (MLE) to maximize the likelihood function of the model.

According to an embodiment, the compressing is performed using one or more statistical methods, accuracy reduction, truncation or down-sampling.

Compressing may be performed according to any known mathematical algorithm or technical method that is suitable for the intended application. In particular, statistical methods may be used, down-sampling, i.e., the omission of values according to a rule or according to a statistic, accuracy reduction or truncation, which relates to the reduction of significant digits of the data representing the values, etc.

According to an embodiment, one or more statistical methods is to estimate one or more of key statistical properties, especially moments of the distribution like average or mean, standard deviation or variance, or also potentially higher moments.

By using an assumed parametric statistical distribution for the values, the parameters of the distribution can in general be used. I.e., instead of using the result of a statistic such as a mean value, the values of these parameters represent the compressed values. The list is not exhaustive.

As an example, a simple approach to calculate the mean temperature over a time interval could be used. Other times and periods are suitable as well. Alternatively, mean and standard deviation may be calculated and used to fit a suitable statistical distribution (e.g., normal, gamma, beta distribution), based on the range of possible values or the variable, e.g., all real values, only positive values, or values in an interval, e.g. [0,1]. The change of cumulated hazard function or reliability is then based on the use of this distribution.

According to an embodiment, the data from the field devices are collected over a complete cycle, and compression is performed using the collected data of the complete cycle.

A complete cycle comprises a complete individual cycle as indicated above. The complete cycle starts when a previous cycle ends, and ends when the current cycle ends as described above. The complete cycle therefore comprises the determined time span.

According to an embodiment, the data from the field devices are compressed continuously during the course of the complete cycle.

For example, periods are defined over which a statistical value, e.g., a mean value is calculated and used as a compressed value. Since, a time interval can become large, this embodiment allows to reduce the computational effort at the end of a cycle.

According to an embodiment, the accuracy criteria is a relative or an absolute value.

In other words, the reliability and/or hazard values are compared with a threshold value either by subjecting the reliability and/or hazard values of the compressed data and the uncompressed data to a division operation and comparing the result with the threshold value, or by subjecting them to a subtraction operation and comparing the result with the threshold value.

According to an aspect, a system for assessing the reliability of field device data is provided. The system comprises a computing device connected to the plurality of field devices, wherein the computing device is configured to perform the steps of the method according to any of the previous claims.

The computing device comprises at least one processor, a memory for storing a program that contains instructions to perform the steps of the method and memory to store the data. The computer device may be a single hardware device or a distributed or virtual device.

The system may further comprise the plurality of field devices. The connections of the computing device to the field devices may be realized in a wired or wireless way over one or several of the following physical hardware and hardware and/or software protocols: field bus, Ethernet, Bluetooth, wireless LAN, LTE, GSM, to name a few examples, or any wireless protocol, and/or any wired protocol, and the respective communication units.

The computer program element may be part of a computer program, but it can also be an entire program by itself. For example, the computer program element may be used to update an already existing computer program to get to the present invention.

According to further aspect, a program element is provided comprising instructions for performing the steps of the method.

According to further aspect, a computer-readable storage device on which the program element is stored.

The computer readable medium may be seen as a storage medium, such as for example, a USB stick, a CD, a DVD, a data storage device, a hard disk, or any other medium on which a program element as described above can be stored.

Whereas the current description refers to the reliability as a function of time, it is well understood, that the use of time can be replaced by other variables measuring the progression of aging of the devices. Commonly used alternatives are especially the number of operations or cycles performed, in case a system is operated irregularly over time.

Other variations to the disclosed embodiments can be understood and effected by those skilled in the art of practicing the claimed invention, from the study of the drawings, the disclosure, and the appended claims. In the claims, the word "comprising" does not exclude other elements or steps, and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

These and other features, aspects and advantages of the present invention will become better understood with reference to the accompanying figures and the following description.

SHORT DESCRIPTION OF THE FIGURES

Fig. 1     shows a flow diagram of the computer-implemented method for assessing the reliability of field device data.
Fig. 2a    shows a first scenario with different conditions represented by an environmental variable x.
Fig. 2b    shows the results of the compressed and the uncompressed approach for the first scenario with respect to the effective time t_effective.
Fig. 3a    shows a second scenario with different conditions represented by an environmental variable x.
Fig. 3b    shows the results of the compressed and the uncompressed approach for the second scenario with respect to the effective time t_effective.
Fig. 4     shows a block diagram of the system.

DETAILED DESCRIPTION OF EMBODIMENTS

Corresponding parts are provided with the same reference symbols in all figures.

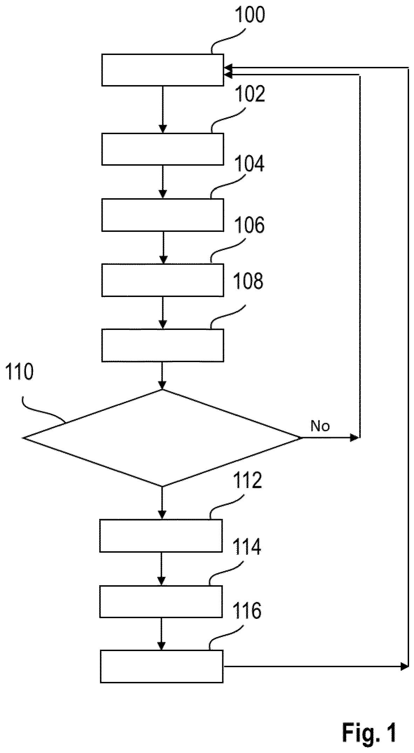

Fig. 1 shows a flow diagram of the computer implemented method 100 for assessing the reliability of field device data.

A complete cycle comprises steps 102, where the cycle starts, to 116, where the cycle ends. Within a cycle, steps 102 to 110 are looped until a condition is met, as described in the following. When the condition is met, steps 112 to 116 are performed, the current cycle ends and a new cycle is started.

Beginning with a first cycle, in step 102 reliability-related data from field devices is received. The reliability data may be environment and/or usage data of the environment of the device and the usage of the device. The data is associated to at least one variable that corresponds to an environment type such as temperature, humidity, pressure, pH-value, etc. The data related to an environment type is also referred to as "type of data" herein.

In step 104, a first reliability value and/or a first hazard value is calculated and accumulated over a yet undetermined time span. The data used for this step is uncompressed data. The calculation and accumulation are performed according to a model which uses at least one variable representing the reliability-related data. An example is given further below. In a third step of the first cycle, a second reliability value and/or a second hazard value is calculated and accumulated over the yet undetermined time span with compression according to the model, which uses the at least one variable representing the reliability-related data, wherein the values of the at least one variable are compressed.

In a further step 106, which can be performed before, after or at the same time as step 104, a second reliability value and/or a second hazard value is calculated and accumulated over the yet undetermined time span using compressed data. The calculation and accumulation is performed according to the model.

In step 108, the first and the second reliability and/or second hazard values are compared to a related pre-defined threshold corresponding to an accuracy. For that, a ratio or a difference of these values is calculated, such that the comparison is either relative or absolute.

In step 110, it is decided whether steps 102 to 108 are executed again. This is the case if the result of the comparison of the previous step was that the threshold had not been exceeded. Otherwise, if the threshold had been exceeded, the calculation of the first and the second reliability and/or hazard values is stopped, and the time span is determined. That is, this event defines the end time of the period of the first cycle. In the following step 112, the compressed values of the at least one variable are stored, and in step 114, the first cycle is closed. Contemporarily, the next cycle starts and the execution jumps again to step 102.

It is assumed, that a device in the field measures at least one variable (e.g., temperature, humidity, voltage, current level, etc.) that influences its reliability. This data related to one of these measured variables is also referred to as data of an environment type or "type of data" in this disclosure. In the following, one variable is regarded. The extension to more than one variable, or even to variables that interfere with each other is straightforward.

The variable is used to relate it to the acceleration factor by the use of an acceleration function. The acceleration function depends on further variables and parameters as described below. The effect of these "acceleration factors" (AFs) on the hazard rate or, alternatively, the reliability is described using commonly used models. For example, two of the most commonly used models are the "scale accelerated failure time" (SAFT) model, also called the "accelerated lifetime" (ALT) model, and the "proportional hazard" (PH) model. Their formulation in terms of an effective lifetime or a modified hazard function is given below. For example, the effective lifetime is used as model, which is given as

$$t_{effective} = \int_0^t AF(x(t');\theta)\,dt' \qquad (1)$$

where $x(t)$ denotes the environmental influence, $AF(x;\theta)$ the functional form of the acceleration depending on $x$, but also some model parameter $\theta$. Alternatively, the cumulative hazard function is used, which is given as

$$H(t) = \int_0^t h_0'(t')AF(x(t');\theta')\,dt' \qquad (2)$$

with $h'_0(t)$ the base or reference hazard function, and as before $AF(x;\theta')$ the acceleration factor.

One of the challenges in such models in practice is the necessity to ascertain the acceleration factor, AF. While in numerous instances, the functional form of AF is known, e.g., Arrhenius, Peck-Hallberg, or the inverse power law form may be used, but the parameters in these models must be determined. This is frequently accomplished in dedicated laboratory experiments, which are both time-consuming and costly. An alternative approach is the utilization of field data, wherein the environmental variable or usage is measured and subsequently combined with failure information, e.g., from reports, to assess them. For highly reliable devices, the data must be collected and stored over an extended period for a significant number of devices. This results in generating a substantial amount of data, which presents a challenge for the practical application. One solution is to compress the data. This can be accomplished, for example, by reducing or averaging it over a longer time horizon. Alternatively, statistical properties such as the mean and standard deviation can be calculated to capture its variability. However, the conditions will, in general, not be stable. Therefore, the compression algorithm must be informed of the time horizon over which the compression should be applied. To address this issue, the method proposed herein uses one or more models describing the acceleration of lifetime. In addition, one representative value or two or more limits of the parameter in the models are determined. These can be derived from either prior knowledge or from known physical constraints. The relative change of the cumulated hazard or the reliability is calculated using the uncompressed data and then one based on the compressed data for the parameter values. Based on a pre-defined accuracy criterion, the compression is stopped, and the current compressed values and the time interval are sent or stored. Afterwards, a new compression cycle commences.

For the compression algorithm, one can make use of a number of approaches: A simple one is to use the mean of the variable over the time interval alone. Other moments are suitable as well. Alternatively, mean and standard deviation are calculated and used to fit a suitable statistical distribution (e.g. normal, gamma, beta distribution), based on the range of possible parameters for x. Such a range may comprise for example all possible values, positive values only, or limited to an interval, e.g., [0,1]). The change of cumulated hazard function or reliability is then based on the use of this distribution.

As a concrete example, we assume that, e.g., mean $\mu(x)$ and standard deviation $o(x)$ are calculated for a time interval [t,t+T]. The evaluation of, e.g. the effective age using the compressed data consists of

$$\widehat{\Delta t}_{effective} = \int_t^{t+T} \widehat{AF}(\mu(x),\sigma(x);\theta)\,dt' = \widehat{AF}(\mu(x),\sigma(x);\theta)T. \qquad (3)$$

where $\widehat{AF}$ is the approximation based on the mean value and standard deviation of $x(t')$, $t' \in [t,t+T]$, and $\theta$ is one of the typical or parameter values used for the evaluation.

As simplest example assume that the compression consists of using only the mean of the data $\mu(x)$. The calculation of

$$\ddot{\Delta}\tau_{effective}$$

consists of using directly $$\widehat{AF} = AF(\mu(x))$$ instead of the uncompressed values.

An alternative approach is to assume a normal distribution for x and the acceleration factor is of the form exp(-$\beta x$) with beta being a parameter. The compression consists of calculation $\mu(x)$ and $\sigma(x)$. The acceleration factor in this case is given by

$$\widehat{AF}(\mu, \sigma) = \int_{-\infty}^{+\infty} \exp(-\beta x)\, \frac{1}{\sqrt{2\pi\sigma^2}} \exp\left(-\frac{(x-\mu)^2}{2\sigma^2}\right) dx = \exp\left(-\beta\mu + \frac{\beta^2\sigma^2}{2}\right)$$

which differs from the pure mean approach by the second term in the exponential.

For the accuracy criteria an absolute or relative one can be used. A minimum time interval (e.g. in order to capture at least daily variations) can be used in addition. A maximum time interval after which data is stored in any case, is also possible to be used.

The stored data can then be used to reevaluate the reliability at a later time, if the parameters are known more accurately. If this parameter is within the range of the one used for the compression, the accuracy is guaranteed. Furthermore, and of even greater importance, the compressed data can be used with separately collected failure or repair information to update or improve the model parameter. A typical example would be an MLE approach, where the likelihood function of the reliability model is maximized.

The compression algorithm can be implemented in two ways. The first is to store all the information over the increasing time interval. This is challenging if the time interval becomes large. A more suitable approach is an online algorithm, where the data is processed while being measured.

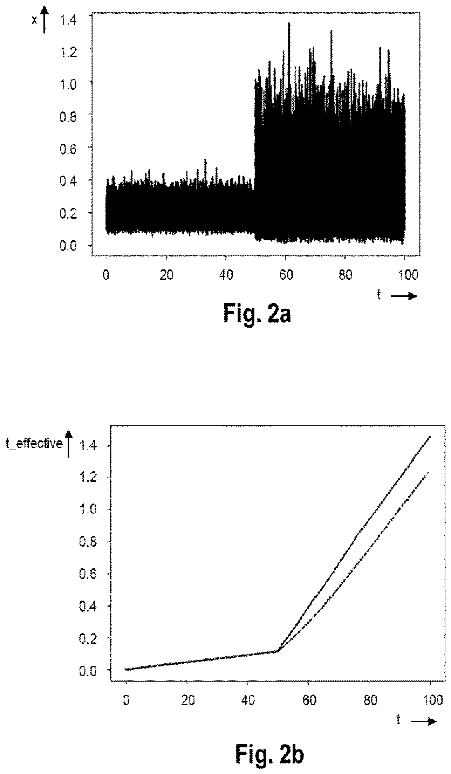

Figs. 2a to 3b show two examples with simulations, in which the accelerated lifetime model has been used as a basis together with a power-law for the covariate x and the value of the power being the unknown parameter.

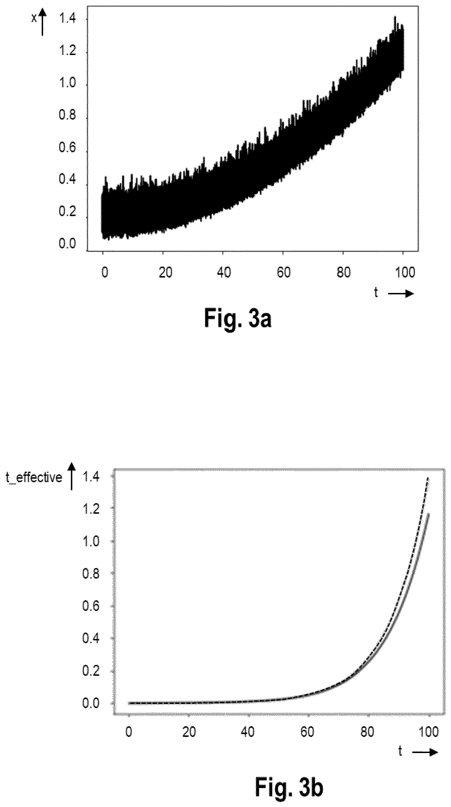

Figs. 2a and 2b show an example with a first scenario, where the conditions change at one instance in time, and Figs 3a and 3b show a second example with a scenario in which the conditions change gradually over time. Mean and standard deviation are used for the compression. In Fig. 2b and 3b, the result for the effective time of the correct calculation and the one using the compressed version are shown.

Fig. 2a depicts the environmental variable x as a function of time. At t = 50, a sudden change occurs. As shown in Fig. 2b, while the exact calculation (solid line) and the one using the compressed approach (dotted line) agree up to this point, they subsequently diverge. For instance, at t = 55, the compression process would be restarted.

Fig. 3a depicts again the environmental variable x as a function of time. This second example illustrates a gradual change in the environmental variable x. As the change in conditions increases, the discrepancy between the exact (solid line) and compressed approach (dotted line) widens, potentially indicating a need to resume compression.

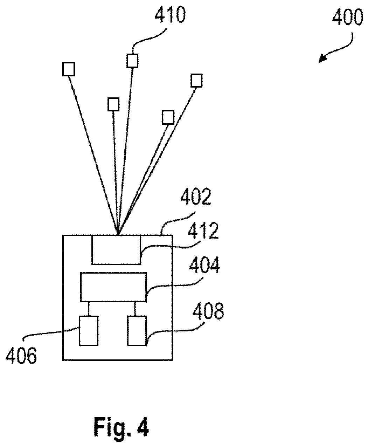

Fig. 4 shows a block diagram of the system 400 for assessing the reliability of field device data. The system 400 comprises a computing device 402 connected to a plurality of field devices 410, wherein the computing device 402 is configured to perform the steps of the method as described herein. The computing device 402 comprises at least one processor 404, a first memory 406 for storing a program that contains instructions to perform the steps of the method and second memory 408 to store the data. The computer device 402 may be a single hardware device or a distributed or virtual device. The connections of the computing device 402 to the field devices 410 may be realized in wired or wireless. For that, the computing device comprises one or several corresponding communication devices 412. The connections may further be realized using a network with network components such as base stations, routers, gateways, or other network nodes.

## Claims

1. Computer-implemented method for assessing the reliability of field device data comprising the steps:

   starting (100) an individual cycle
   receiving (102) reliability-related data from field devices;
   calculating (104) and accumulating a first reliability value and/or a first hazard value over a yet undetermined time span without compression according to a model that uses at least one variable representing the reliability-related data;
   calculating (106) and accumulating a second reliability value and/or a second hazard value over the yet undetermined time span with compression according to the model, which uses the at least one variable representing the reliability-related data, wherein the values of the at least one variable are compressed;

comparing (108) the first and the second reliability and/or second hazard values to a related pre-defined threshold corresponding to an accuracy;

if exceeding the threshold (110), stopping (112) the calculation of the first and the second reliability and/or hazard values and determining the time span; and

storing (114) the compressed values of the at least one variable; and

closing (116) the individual cycle.

2. Method according to claim 1, wherein the reliability-related data is usage and/or environment data and the at least one variable represents the reliability-related data.

3. Method according to any of the previous claims, wherein the at least one variable relates to a temperature, pressure, humidity, voltage, current, vibration, amount of chemical substances, intensity of salt or corrosive substances, or a pH value.

4. Method according to any of the previous claims, wherein the model comprises an acceleration factor, wherein the acceleration factor depends on the at least one usage and environment variable and on model parameters.

5. Method according to any of the previous claims, wherein the compressed values are used to calculate a reliability either as a function of the time covered or alternatively for a specific time instance.

6. Method according to any of the previous claims, wherein the compressed and stored values are used to reevaluate the reliability either as a function of time, when the parameters of the model have changed or alternatively for a specific time instance.

7. Method according to the previous claim, wherein adapting the model includes receiving separate failure or repair information from the field devices, and all available compressed values are used with the separately received failure or repair information to adapt the model parameters.

8. Method according to any of the previous claims, wherein the compressing is performed using one or more statistical methods, accuracy reduction, truncation or down-sampling.

9. Method according to claim 8, wherein the one or more statistical methods is to estimate parameters of the statistical distribution of the data, or to determine parameters of an assumed statistical distribution.

10. Method according to any of the previous claims, wherein the data from the field devices are collected over a complete cycle and the compression is performed using the collected data of the complete cycle.

11. Method according to any of the claims 1 to 9, wherein the data from the field devices are compressed continuously during the course of the complete cycle.

12. Method according to any of the previous claims, wherein the accuracy criterium is a relative or an absolute value.

13. System (400) for assessing the reliability of field device data comprising a computing device (402) connected to a plurality of field devices (410), wherein the computing device (402) is configured to perform the steps of the method according to any of the previous claims.

14. Program element comprising instructions for performing the steps of the method according to any of claims 1 to 12.

15. Computer-readable storage device on which the program element, according to claim 14, is stored.

Fig. 1

Fig. 2a

Fig. 2b

Fig. 3a

Fig. 3b

410    400

402
412
404
408
406

**Fig. 4**

Europäisches
Patentamt

European
Patent Office

Office européen
des brevets

# EUROPEAN SEARCH REPORT

**Application Number**

EP 24 17 5794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/196032 A1 (SCHMITZ STEFAN [DE] ET AL) 18 June 2020 (2020-06-18) | 1-15 | INV. G05B19/042 |
| Y | * paragraphs [0002] - [0016], [0028], [0029], [0045], [0074] - [0109], [0128] - [0130]; figures 1-4 * | 4,7 | |
| Y | US 2019/325663 A1 (BRIM MILES W [US]) 24 October 2019 (2019-10-24) * paragraphs [0005], [0073]; figure 1A * | 4,7 | |

-----

-----

| | | TECHNICAL FIELDS SEARCHED (IPC) |
|---|---|---|
| | | G05B |

The present search report has been drawn up for all claims

| Place of search | Date of completion of the search | Examiner |
|---|---|---|
| Munich | 7 October 2024 | Postemer, Patricia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 5794

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | Publication date | Patent family member(s) | Publication date |
|---|---|---|---|
| US 2020196032 A1 | 18-06-2020 | CN 111324055 A | 23-06-2020 |
| | | DE 102018009825 A1 | 18-06-2020 |
| | | EP 3667244 A1 | 17-06-2020 |
| | | US 2020196032 A1 | 18-06-2020 |
| US 2019325663 A1 | 24-10-2019 | US 2019325663 A1 | 24-10-2019 |
| | | WO 2019209519 A1 | 31-10-2019 |

EPO FORM P0459

For more details about this annex : see Official Journal of the European Patent Office, No. 12/82